# EUROPEAN PATENT SPECIFICATION

(11) **EP 3 269 944 B1**
(45) Date of publication and mention of the grant of the patent: **04.03.2020**
(21) Application number: 17178665.0
(22) Date of filing: 29.06.2017
(51) Int. Cl.: F01D 25/02, F02C 7/047, F02C 9/00

(54) **A METHOD OF OPERATING A GAS TURBINE ENGINE**
VERFAHREN ZUM BETRIEB EINES GASTURBINENMOTORS
PROCÉDÉ DE FONCTIONNEMENT D'UN MOTEUR À TURBINE À GAZ

(30) Priority: 11.07.2016 GB 201612021
(43) Date of publication of application: 17.01.2018
(73) Proprietor: Rolls-Royce plc, London N1 9FX (GB)
(72) Inventor: Rowe, Arthur, Derby, Derbyshire DE24 8BJ (GB)
(74) Representative: Rolls-Royce plc

(56) References cited:
- GB-A- 2 447 238
- US-A1- 2016 024 960
- US-A1- 2016 035 203

## Description

This disclosure relates to a method and system for operating a gas turbine engine of an aircraft to mitigate the risk of ice formation within the gas turbine engine.

There is a risk during cruise or descent of an aircraft of ice formation and the build-up of ice within the engine of the aircraft. This presents a danger to the engine as any ice build-up may shed and cause engine instability or damage. Additionally, ice build-up on fan or compressor blades may result in deflection of the blades and cause further damage to the engine during flight.

In a previously considered arrangement the engine idle speed of the engine is increased during descent conditions in order to reduce the risk of ice formation. However, this results in a significant increase in fuel consumption during descent and it cannot be guaranteed to eliminate the formation of ice.

US 2014/0144124 is directed towards a system that includes a recirculation system. The recirculation system includes a compressor discharge air line extending from a compressor to an air intake. The compressor discharge air line is configured to flow a compressor discharge air flow, and the air intake is configured to supply an air flow to the compressor. An ejector is disposed along the compressor discharge air line between the compressor and the air intake. The ejector is configured to receive and mix the compressor discharge air flow and a turbine exhaust flow to form a first mixture. WO 2012/125895 is directed towards an aircraft engine including a precooler disposed within a nacelle. The precooler defines an ambient air passage and a bleed air passage. Air passes through the precooler from an ambient air inlet to an ambient air outlet. Bleed air passes through the precooler from a bleed air inlet to a bleed air outlet. Heat is transferred between the air and the bleed air via heat exchange within the precooler. At least one pressure relief door disposed proximate to the air outlet of the engine. A controller is operatively connected to the pressure relief door. The controller at least opens the pressure relief door based on a demand for increased flow of air through the ambient air passage. US 2016/024960 discloses an icing sensor unit having at least one sensor arranged between a first compressor blade row and a first compressor guide vane row. The first compressor blade row is arranged in a compressor flow channel directly downstream of the inlet guide vane row, and the first compressor guide vane row is arranged directly downstream of the first compressor blade row. A method detects an imminent icing of the compressor, and the compressor is safeguarded therefrom such that at least inlet guide vanes of the inlet guide vane row are adjusted such that the acceleration of an intake air mass flow is reduced. GB 2 447 238 discloses an arrangement for measuring temperature at regular intervals. Where a temperature drop of at least 20°C per second is measured, a signal indicative of an ice shedding event is produced and sent to an indicator device. Alternatively pressure may be measured to indicate an ice shedding event. Detection of when ice is shed and passed into the engine allows the engine to be inspected for damage associated with ice impact. Turbine rotor speed may be measured in addition to temperature or pressure to confirm ice shedding.

It is therefore desirable to provide an improved method and system for operating a gas turbine engine to mitigate the risk of ice formation.

According to an aspect there is provided a method according to claim 1 of operating a gas turbine engine of an aircraft to mitigate the risk of ice formation within the engine, the method comprising controlling at least one operational parameter of the engine such that the engine operates in a safe zone, wherein it is determined that the engine is operating within a safe zone based on at least a core pressure parameter relating to the pressure within the engine and a core temperature parameter relating to the temperature within the engine, wherein the safe zone is defined by the product of the core pressure parameter and core temperature parameter being above a safe threshold. The safe zone may be operating conditions of the engine which are known to be reliably safe from ice formation. The term "core" is used to refer to a temperature/pressure within the gas turbine engine, such as in the region of the inlet to the high pressure compressor.

The core temperature parameter may be on a scale that has zero at freezing point (for example degrees centigrade). When the pressure is measured in psia and the temperature is measured in degrees centigrade, the safe threshold may be 160 psia°C. Thus, when the product of the core pressure parameter and core temperature parameter is compared to the safe threshold, if the product of the core pressure parameter and the core temperature parameter is more than the safe threshold e.g. 160, it is determined that the engine is in the safe zone.

The core pressure parameter may relate to the static pressure within the engine and the core temperature parameter may relate to the stagnation temperature within the engine.

The core pressure parameter may be generated using a pressure sensor or alternatively may be calculated based on at least an inlet pressure parameter relating to the pressure in the region of the inlet of the engine, and/or based on the rotational speed of one or more of the fan and the intermediate pressure compressor. The inlet pressure parameter may be generated using a pressure sensor located in the region of the inlet of the engine.

The core temperature parameter may be calculated based on at least the core pressure parameter.

The core pressure parameter and the core temperature parameter may relate to the pressure and temperature respectively in the region of the inlet to the high pressure compressor of an engine. This may be an area at high risk of ice formation within the engine.

The method may further comprise determining that there is a risk of icing and in response thereto, controlling at least one operational parameter of the engine such that the engine operates in the safe zone. It may be determined that there is a risk of icing based on at least it being determined that the aircraft is in descent and/or based on at least it being determined that the ambient temperature is within a predefined range. The predefined range may be between 6 and 20 degrees centigrade above a temperature defined by the International Standard Atmosphere. In this predefined temperature range, the risk of icing is significantly higher than outside this range. It may also be determined that there is a risk of icing based on at least it being determined that a measured temperature parameter relating to a temperature within the engine is below a threshold. This threshold may be based on the expected temperature within the engine, such that, if the measured temperature is below the threshold e.g. the expected temperature, it may be determined that there is a risk of icing. Alternatively, the threshold may be about 5 degrees centigrade or about 10 degrees or more centigrade below the expected temperature. Determining that there is a risk of icing may comprise any of the above examples in any combination. The expected temperature may be calculated based on an inlet pressure parameter, an inlet temperature parameter and the core pressure parameter.

Controlling at least one operational parameter may comprise controlling the idle speed of the engine. Therefore, if it is determined that the engine is not operating within the safe zone, the idle speed may be increased until the engine is operating within the safe zone. Alternatively or additionally, controlling at least one operational parameter may comprise controlling the bleed from the compressor, the variable inlet guide vanes and/or the variable stator vanes. The above operational parameters may be controlled alone or in any combination to ensure that the engine is operating within the safe zone.

According to another aspect, there is provided a system according to claim 15 for operating a gas turbine engine to mitigate the risk of ice formation within the engine comprising a controller arranged to control at least one operational parameter of the engine such that the engine operates in a safe zone, and a safe zone determining module arranged to determine whether the engine is operating within the safe zone based on at least a core pressure parameter relating to the pressure within the engine and a core temperature parameter relating to the temperature within the engine, wherein the safe zone is defined by the product of the core pressure parameter and core temperature parameter being above a safe threshold.

The core pressure parameter may relate to the static pressure within the engine and the core temperature parameter may relate to the stagnation temperature within the engine.

The safe zone determining module is arranged to determine that the engine is operating within the safe zone when the product of the core pressure parameter and the core temperature parameter is above a safe threshold. The safe threshold may be 160 when the pressure is in psia and the temperature is in degrees centigrade.

The system may further comprise a calculation module arranged to calculate the core temperature parameter based on at least the core pressure parameter and/or to calculate the core pressure parameter based on at least an inlet pressure parameter relating to the pressure in the region of the inlet of the engine.

The system may further comprise an icing risk determining module arranged to determine whether there is a risk of icing.

The icing risk determining module may determine that there is a risk of icing when the aircraft is in descent and/or when the ambient temperature is within a predefined range. The icing risk determining module may also determine that there is a risk of icing when a measured temperature parameter within the engine is below a threshold. This threshold may be based on an expected temperature within the engine, such that, if the measured temperature is below the threshold e.g. the expected temperature, it may be determined that there is a risk of icing. Alternatively, the threshold may be about 5 degrees centigrade or about 10 degrees centigrade or more below the expected temperature. Determining the risk of icing may comprise any of the above examples in any combination.

The calculation module may be further arranged to determine the expected temperature based on an inlet pressure parameter, an inlet temperature parameter and the core pressure parameter.

The controller may be arranged to control the idle speed, the bleed from the compressor, the variable inlet guide vanes and/or the variable stator vanes.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Various arrangements will now be described, by way of example, with reference to the accompanying drawings, in which:
Figure 1 schematically shows a cross-section of a turbofan gas turbine engine; and
Figure 2 schematically shows the system for the method of operating the gas turbine engine according to a first arrangement.

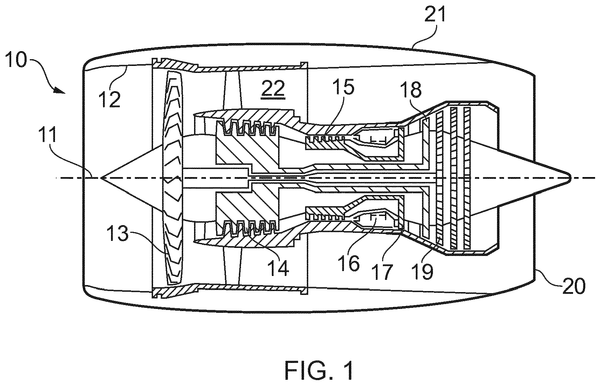

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

During operation, air entering the intake 12 is accelerated by the fan 13 to produce two air flows: a first airflow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

During use, it is possible for ice to form within the engine. The conditions for ice formation are particularly likely to occur in areas of moderate pressure, such as the inlet to the high pressure compressor 15. This is due to the fact that compression of air reduces the relative humidity of the air. This means that more water may be evaporated into the air before it becomes saturated, and therefore results in a lower wet bulb temperature relative to the dry bulb temperature. This may result in the condition where the wet bulb temperature is below freezing whilst the dry bulb temperature is above freezing.

As will be described in detail below, in order to mitigate the risk of ice formation within the engine 10, the gas turbine engine 10 is provided with a control system for controlling the gas turbine engine 10.

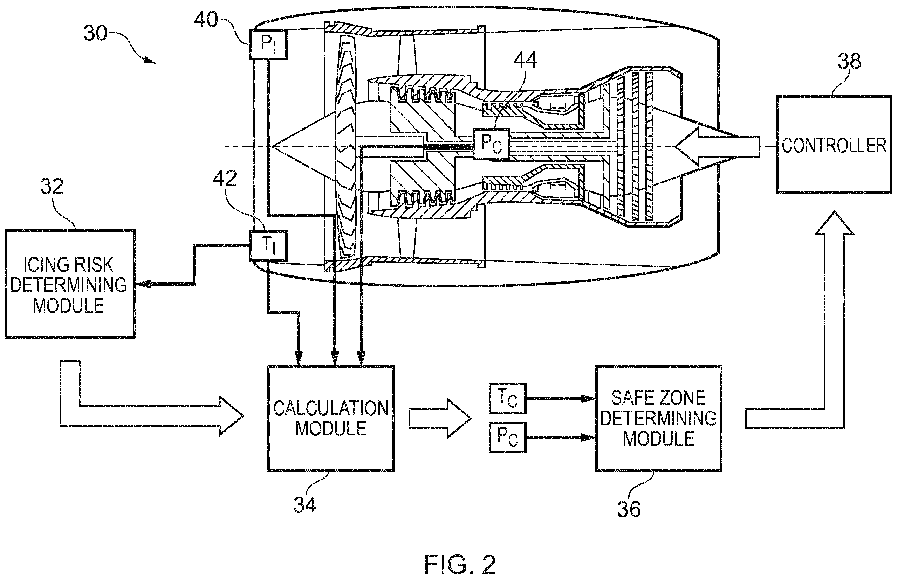

**Figure 2** shows a control system 30 for operating the gas turbine engine 10 to mitigate the risk of ice formation within the engine 10. The control system 30 comprises an icing risk determining module 32, a calculation module 34, a safe zone determining module 36 and a controller 38.

The system further comprises an inlet pressure sensor 40, an inlet temperature sensor 42 and a core pressure sensor 44. The inlet pressure sensor 40 and inlet temperature sensor 42 are located in the region of the air intake 12 of the engine 10 and are arranged to measure the stagnation pressure P_{I} and stagnation temperature T_{I} respectively at the air intake 12 of the engine 10. The core pressure sensor 44 is located in the region of the inlet to the high pressure compressor 15 and is arranged to measure the static pressure P_{C} in the region of the inlet to the high pressure compressor 15. The sensors 40, 42, 44 are arranged to generate an inlet pressure parameter, an inlet temperature parameter and a core pressure parameter relating to the pressure/temperature at the respective positions. The value of the parameter generated is related to the respective pressure/temperature and as such the value of the pressure/temperature can be derived from the value of the parameter.

The icing risk determining module 32 is arranged to determine whether there is a risk of engine icing based on certain conditions being met. The system is arranged such that if the conditions are met, a risk of icing is determined and at least one operational parameter of the engine 10 (e.g. idle speed, compressor bleed) is controlled to mitigate the risk of icing. In this arrangement, the icing risk determining module 32 is connected to the inlet temperature sensor 42 and the main engine control system (not shown) is arranged to determine that there is a risk of icing when the inlet temperature is within a predetermined range and when the aircraft is in descent.

The calculation module 34 is arranged to calculate the core temperature T_{C} in the region of the inlet to the high pressure compressor 15. In this arrangement the calculation module 34 is connected to the inlet pressure sensor 40, the inlet temperature sensor 42 and the core pressure sensor 44. The calculation module 34 is arranged to calculate a core temperature parameter based on the inlet pressure parameter, the inlet temperature parameter and the core pressure parameter. The core temperature parameter relates to the core temperature in the region of the inlet to the high pressure compressor 15. The calculation module 34 may be arranged to calculate the actual value of the core temperature T_{C} (for example in °C) or a core temperature parameter relating to the core temperature. Similarly, the calculation module 34 may also be arranged to convert the inlet pressure parameter, the inlet temperature parameter and the core pressure parameter into the actual values (for example in psia or °C).

The safe zone determining module 36 is arranged to determine whether the engine 10 is operating within a safe zone. The safe zone determining module 36 is arranged to receive the core temperature T_{C} and the core pressure P_{C} from the calculation module 34. In this arrangement the safe zone determining module 36 is arranged to receive the absolute values in °C and psia, although in other arrangements it could be arranged to receive a core temperature parameter representing the core temperature and a core pressure parameter relating to the core pressure. The safe zone determining module is arranged to calculate a product X_{C} of the core pressure P_{C} and core temperature T_{C}. This product X_{C} is then compared to a safe threshold. Based on this comparison, the safe zone determining module 36 is arranged to determine whether the engine 10 is operating within the safe zone. The controller 38 is arranged to control at least one operational parameter of the engine 10, such as the idle speed, in order to ensure that the engine 10 is operating within the safe zone.

In use, the icing risk determining module 32 continually monitors whether there is a risk of icing. As described above, in this arrangement it is determined that there is a risk of icing when it is determined that the aircraft is in descent and when it is determined that the ambient air temperature (measured using the temperature sensor 42) is between 6 and 20 degrees centigrade above the international standard atmosphere (ISA) at any given altitude. If both of these conditions are met, then the icing risk determining module 32 will determine that there is a risk of icing. In response to determining that there is a risk of icing the controller 38 will control an operational parameter of the engine 10, thus preventing the formation of ice.

In this arrangement, the controller 38 controls an operational parameter of the engine 10 so that it operates within a "safe zone" in which ice will not form within the engine. The "safe zone" is defined by the product of the core pressure P_{C} and the core temperature T_{C} being above a safe threshold. With the core pressure P_{C} being measured in psia, and the core temperature T_{C} being measured in degrees centigrade, in this arrangement the safe threshold is 160. This safe threshold is defined by the fact that ice crystal formation can occur within the engine when the wet bulb temperature within the engine is below freezing and the dry bulb temperature is above freezing. In such a situation, partially melted ice crystals may freeze onto cold surfaces within the engine and can build up, potentially resulting in engine instability and/or engine damage. However, if the air temperature is high enough such that both the wet bulb temperature and the dry bulb temperature are above freezing, then no ice build-up can occur. The safe threshold of 160 is therefore the threshold over which it is known that the conditions will not allow ice formation within the engine. This can be approximately modelled by the relationship pressure (psia) x temperature (°C) > 160.

The calculation module 34 receives the inlet pressure parameter relating to the inlet pressure P_{I}, the inlet temperature parameter relating to the inlet temperature T_{I} and the core pressure parameter relating to the core pressure P_{C}. Using the values of these parameters the calculation module 34 calculates the core temperature T_{C} in degrees centigrade. In this arrangement the calculation module 34 converts the values of the parameters output by the sensors into psia and degrees centigrade, and calculates the core temperature in degrees centigrade, but it should be appreciated that in other arrangements the temperatures/pressures could be output in other units of measurement.

The safe zone determining module 36 receives the core pressure P_{C} (in psia measured using the pressure sensor 44) and the core temperature T_{C} (in degrees centigrade and calculated by the calculation module 34) and calculates the product X_{C} of the core pressure P_{C} and core temperature T_{C}. The product is then compared to a predetermined safe threshold which in this arrangement is 160. If the product X_{C} is less than or equal to the predetermined safe threshold of 160 then the safe zone determining module 36 determines that the engine 10 is not operating in the safe zone. If the product X_{C} is larger than the predetermined safe threshold of 160 then the safe zone determining module 36 determines that the engine 10 is operating within the safe zone. It should be appreciated that if other units were used then the safe threshold would have a different value.

In an embodiment not forming part of the present invention, the safe zone determining module 36 may determine a dynamic safe temperature threshold based on the current core pressure P_{c} and the relationship between the core pressure, core temperature, and predetermined safe threshold, the safe temperature threshold indicating the temperature above which the engine 10 is operating within the safe zone.

If the safe zone determining module 36 determines that the engine 10 is not operating within the safe zone (i.e. the product X_{C} is 160 or less) then the controller 38 controls an operational parameter of the engine 10 so that the engine 10 does operate within the safe zone. In this arrangement, if the product X_{C} is 160 or less then the controller 38 increases the idle speed of the engine 10. This will increase the core pressure P_{C} and the core temperature T_{C} of the engine 10 so that the engine 10 operates within the safe zone. There is a feedback loop in that the calculation module 34 continually calculates and provides the core pressure P_{C} and the core temperature T_{C} to the safe zone determining module 36 which continually checks whether the engine 10 is operating in the safe zone. The idle speed of the engine 10 is thus controlled by the controller 38 to ensure that the engine operates in the safe zone.

If the icing risk determining module 32 determines that there is no longer a risk of icing, the safe zone determining module 36 may no longer determine whether or not the engine 10 is operating within a safe zone and the controller 38 may therefore no longer control the idle speed of the engine 10.

The arrangement described above provides a control loop to dynamically adjust the idle speed of the engine to ensure that the engine 10 always operates within a safe zone when there is a risk of icing, thus mitigating the risk of ice formation.

Although it has been described that the controller 38 controls the idle speed of the engine to mitigate the risk of ice formation, in other arrangements other operational parameters could be controlled to prevent the formation of ice. For example, the bleed from the engine compressor could be controlled to keep the engine operating in the safe zone. In another arrangement the controller 38 could control the variable stator vanes and/or the variable guide vanes so as to ensure that the engine 10 operates within a safe zone in which the risk of icing is mitigated.

In the arrangement described above the core temperature parameter is calculated based on a measured core pressure parameter, a measured inlet temperature parameter and a measured inlet pressure parameter. However, it should be appreciated that in other arrangements any of these parameters may be measured or calculated based on other measured parameters. For example, there may be no core pressure sensor 44 and instead the inlet pressure parameter, the inlet temperature parameter and one or more of the fan speed and the intermediate pressure compressor speed may be used to calculate a core pressure parameter and a core temperature parameter. The variable geometry and bleed settings for the IP compressor may be additionally used to calculate the core pressure parameter and the core temperature parameter.

It should be appreciated that there may be no icing risk determining module 32 and instead the control loop to keep the engine 10 operating in the safe zone may always be operating. Alternatively, in other arrangements the icing risk determining module 32 may determine that there is a risk of icing based on any number of suitable conditions, either in isolation or in combination. For example, a temperature sensor may be provided at the region of the inlet to the high pressure compressor 15 which is arranged to generate a core temperature parameter representing the core temperature. This measured core temperature may be compared with a calculated expected core temperature T_{C}, and if the measured temperature is less than the expected temperature T_{C} by a predetermined amount then it may be determined that there is an icing risk.

Some aspects of the above-described apparatus, system and methods, may be embodied as machine readable instructions such as processor control code, for example on a non-volatile carrier medium such as a disk, CD- or DVD-ROM, programmed memory such as read only memory (Firmware), or on a data carrier such as an optical or electrical signal carrier. For some applications, arrangements will be implemented on a DSP (Digital Signal Processor), ASIC (Application Specific Integrated Circuit) or FPGA (Field Programmable Gate Array). Thus the code may comprise conventional program code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog TM or VHDL (Very high speed integrated circuit Hardware Description Language). The code may be distributed between a plurality of coupled components in communication with one another. Where appropriate, arrangements may also be implemented using code running on a field-(re)programmable analogue array or similar device in order to configure analogue hardware.

It will be understood that the disclosure is not limited to the arrangements above-described and various modifications and improvements can be made without departing from the scope of the invention as defined in the appended claims.

## Claims

1. A method of operating a gas turbine engine (10) of an aircraft to mitigate the risk of ice formation within the gas turbine engine (10), the method comprising controlling at least one operational parameter of the gas turbine engine (10) such that the gas turbine engine (10) operates in a safe zone, wherein it is determined that the gas turbine engine (10) is operating within a safe zone based on at least a core pressure parameter relating to the pressure within the gas turbine engine and a core temperature parameter relating to the temperature within the gas turbine engine, **characterised in that** the safe zone is defined by the product of the core pressure parameter and core temperature parameter being above a safe threshold.

2. A method of operating a gas turbine engine (10) according to claim 1, wherein the core pressure parameter relates to the static pressure within the gas turbine engine (10).

3. A method of operating a gas turbine engine (10) according to claims 1 or 2, wherein the core temperature parameter relates to the stagnation temperature within the gas turbine engine (10).

4. A method of operating a gas turbine engine (10) according to any preceding claim, wherein the core pressure parameter is generated using a pressure sensor (40).

5. A method of operating a gas turbine engine (10) according to any preceding claim, wherein the core temperature parameter is calculated based on at least the core pressure parameter.

6. A method of operating a gas turbine engine (10) according to any preceding claim, wherein the core pressure parameter and the core temperature parameter relate to the pressure and temperature respectively in the region of the inlet to the high pressure compressor (15) of the gas turbine engine (10).

7. A method of operating a gas turbine engine (10) according to any preceding claim, wherein the core pressure parameter is calculated based on at least an inlet pressure parameter relating to the pressure in the region of the inlet (12) of the gas turbine engine (10).

8. A method of operating a gas turbine engine (10) according to any preceding claim, further comprising determining that there is a risk of icing and in response thereto, controlling at least one operational parameter of the gas turbine engine (10) such that the gas turbine engine (10) operates in the safe zone.

9. A method of operating a gas turbine engine (10) according to claim 8, wherein it is determined that there is a risk of icing based on at least it being determined that the aircraft is in descent.

10. A method of operating a gas turbine engine (10) according to claims 8 or 9, wherein it is determined that there is a risk of icing based on at least it being determined that the ambient temperature is within a predefined range.

11. A method of operating a gas turbine engine (10) according to any of claims 8-10, wherein it is determined that there is a risk of icing based on at least it being determined that a measured temperature parameter relating to a temperature within the gas turbine engine (10) is below a threshold.

12. A method of operating a gas turbine engine (10) according to any preceding claim, wherein controlling at least one operational parameter comprises controlling the idle speed of the gas turbine engine (10).

13. A method of operating a gas turbine engine (10) according to any preceding claim, wherein controlling at least one operational parameter comprises controlling the bleed from the compressor.

14. A method of operating a gas turbine engine (10) according to any preceding claim, wherein controlling at least one operational parameter comprises controlling the variable inlet guide vanes and/or the variable stator vanes.

15. A system (30) for operating a gas turbine engine (10) to mitigate the risk of ice formation within the gas turbine engine (10), the system comprising: a controller (38) configured to control at least one operational parameter of the gas turbine engine (10) such that the gas turbine engine (10) operates in a safe zone; and a safe zone determining module (36) configured to determine whether the gas turbine engine (10) is operating within the safe zone based on at least a core pressure parameter relating to the pressure within the gas turbine engine (10) and a core temperature parameter relating to the temperature within the gas turbine engine (10), **characterised in that** the safe zone is defined by the product of the core pressure parameter and core temperature parameter being above a safe threshold.

## Patentansprüche

1. Verfahren zum Betreiben eines Gasturbinentriebwerks (10) eines Flugzeugs, um das Risiko von Eisbildung innerhalb des Gasturbinentriebwerks (10) zu mindern, das Verfahren umfassend ein Steuern von mindestens einem Betriebsparameter des Gasturbinentriebwerks (10), sodass das Gasturbinentriebwerk (10) in einem sicheren Bereich betrieben wird, wobei bestimmt wird, dass das Gasturbinentriebwerk (10) in einem sicheren Bereich betrieben wird, basierend auf mindestens einem Kerndruckparameter, der sich auf den Druck innerhalb des Gasturbinentriebwerks bezieht, und einem Kerntemperaturparameter, der sich auf die Temperatur innerhalb des Gasturbinentriebwerks bezieht, **dadurch gekennzeichnet, dass** der sichere Bereich dadurch definiert wird, dass das Produkt des Kerndruckparameters und des Kerntemperaturparameters über einem sicheren Schwellenwert ist.

2. Verfahren zum Betreiben eines Gasturbinentriebwerks (10) nach Anspruch 1, wobei sich der Kerndruckparameter auf den statischen Druck innerhalb des Gasturbinentriebwerks (10) bezieht.

3. Verfahren zum Betreiben eines Gasturbinentriebwerks (10) nach den Ansprüchen 1 oder 2, wobei sich der Kerntemperaturparameter auf die Stagnationstemperatur innerhalb des Gasturbinentriebwerks (10) bezieht.

4. Verfahren zum Betreiben eines Gasturbinentriebwerks (10) nach einem vorherigen Anspruch, wobei der Kerndruckparameter unter Verwendung eines Drucksensors (40) erzeugt wird.

5. Verfahren zum Betreiben eines Gasturbinentriebwerks (10) nach einem vorherigen Anspruch, wobei der Kerntemperaturparameter basierend auf mindestens dem Kerndruckparameter berechnet wird.

6. Verfahren zum Betreiben eines Gasturbinentriebwerks (10) nach einem vorherigen Anspruch, wobei sich der Kerndruckparameter und der Kerntemperaturparameter auf den Druck und die Temperatur in der Region des Einlasses zu dem Hochdruckverdichter (15) des Gasturbinentriebwerks (10) beziehen.

7. Verfahren zum Betreiben eines Gasturbinentriebwerks (10) nach einem vorherigen Anspruch, wobei der Kerndruckparameter basierend auf mindestens einem Eingangsdruckparameter berechnet wird, der sich auf den Druck in der Region des Einlasses (12) des Gasturbinentriebwerks (10) bezieht.

8. Verfahren zum Betreiben eines Gasturbinentriebwerks (10) nach einem vorherigen Anspruch, ferner umfassend ein Bestimmen, dass ein Vereisungsrisiko daran besteht, und als Reaktion darauf ein Steuern mindestens eines Betriebsparameters des Gasturbinentriebwerks (10), sodass das Gasturbinentriebwerk (10) in dem sicheren Bereich betrieben wird.

9. Verfahren zum Betreiben eines Gasturbinentriebwerks (10) nach Anspruch 8, wobei bestimmt wird, dass ein Vereisungsrisiko besteht, basierend darauf, dass mindestens bestimmt wird, dass sich das Flugzeug im Sinkflug ist.

10. Verfahren zum Betreiben eines Gasturbinentriebwerks (10) nach den Ansprüchen 8 oder 9, wobei bestimmt wird, dass eine Vereisungsgefahr besteht, basierend darauf, dass mindestens bestimmt wird, dass die Umgebungstemperatur innerhalb eines vorbestimmten Bereichs ist.

11. Verfahren zum Betreiben eines Gasturbinentriebwerks (10) nach einem der Ansprüche 8-10, wobei bestimmt wird, dass ein Vereisungsrisiko besteht, basierend darauf, dass mindestens bestimmt wird, dass ein gemessener Temperaturparameter, der sich auf eine Temperatur innerhalb des Gasturbinentriebwerks (10) bezieht, unterhalb eines Schwellenwerts ist.

12. Verfahren zum Betreiben eines Gasturbinentriebwerks (10) nach einem vorherigen Anspruch, wobei ein Steuern von mindestens einem Betriebsparameter ein Steuern der Leerlaufdrehzahl des Gasturbinentriebwerks (10) umfasst.

13. Verfahren zum Betreiben eines Gasturbinentriebwerks (10) nach einem vorherigen Anspruch, wobei ein Steuern mindestens eines Betriebsparameters ein Steuern der Entlüftung aus dem Kompressor umfasst.

14. Verfahren zum Betreiben eines Gasturbinentriebwerks (10) nach einem vorherigen Anspruch, wobei ein Steuern von mindestens einem Betriebsparameter ein Steuern der variablen Einlassleitschaufeln und/oder der variablen Statorschaufeln umfasst.

15. System (30) zum Betreiben eines Gasturbinentriebwerks (10), um das Risiko von Eisbildung innerhalb des Gasturbinentriebwerks (10) zu mindern, das System umfassend: eine Steuerung (38), die angeordnet ist, um mindestens einen Betriebsparameter des Gasturbinentriebwerks (10) zu steuern, sodass das Gasturbinentriebwerk (10) in einem sicheren Bereich betrieben wird; und ein Sicherheitsbereich-Bestimmungsmodul (36), das angeordnet ist, um zu bestimmen, ob das Gasturbinentriebwerk (10) innerhalb des sicheren Bereichs betrieben wird, basierend auf mindestens einem Kerndruckparameter, der sich auf den Druck innerhalb des Gasturbinentriebwerks (10) bezieht, und einem Kerntemperaturparameter, der sich auf die Temperatur innerhalb des Gasturbinentriebwerks (10) bezieht, **dadurch gekennzeichnet, dass** der sichere Bereich dadurch definiert wird, dass das Produkt des Kerndruckparameters und des Kerntemperaturparameters über einem sicheren Schwellenwert ist.

## Revendications

1. Procédé de fonctionnement d'un moteur à turbine à gaz (10) d'un aéronef pour atténuer le risque de formation de givre dans le moteur à turbine à gaz (10), le procédé comprenant la commande d'au moins un paramètre de fonctionnement du moteur à turbine à gaz (10) de sorte qu'un moteur à turbine à gaz (10) fonctionne dans une zone sûre, le fonctionnement du moteur à turbine à gaz (10) dans une zone sûre étant déterminé sur la base d'au moins un paramètre de pression de noyau lié à la pression à l'intérieur du moteur à turbine à gaz et d'un paramètre de température de noyau lié à la température à l'intérieur du moteur à turbine à gaz, **caractérisé en ce que** la zone sûre est définie par le produit du paramètre de pression de noyau et du paramètre de température de noyau qui est supérieur à un seuil de sécurité.

2. Procédé de fonctionnement d'un moteur à turbine à gaz (10) selon la revendication 1, ledit paramètre de pression de noyau étant lié à la pression statique à l'intérieur du moteur à turbine à gaz (10).

3. Procédé de fonctionnement d'un moteur à turbine à gaz (10) selon les revendications 1 ou 2, ledit paramètre de température de noyau étant lié à la température de stagnation à l'intérieur du moteur à turbine à gaz (10).

4. Procédé de fonctionnement d'un moteur à turbine à gaz (10) selon l'une quelconque des revendications précédentes, ledit paramètre de pression de noyau étant généré à l'aide d'un capteur de pression (40).

5. Procédé de fonctionnement d'un moteur à turbine à gaz (10) selon l'une quelconque des revendications précédentes, ledit paramètre de température de noyau étant calculé sur la base d'au moins le paramètre de pression de noyau.

6. Procédé de fonctionnement d'un moteur à turbine à gaz (10) selon l'une quelconque des revendications précédentes, ledit paramètre de pression de noyau et ledit paramètre de température de noyau étant liés à la pression et à la température respectivement dans la zone de l'entrée du compresseur haute pression (15) du moteur à turbine à gaz (10).

7. Procédé de fonctionnement d'un moteur à turbine à gaz (10) selon l'une quelconque des revendications précédentes, ledit paramètre de pression de noyau étant calculé sur la base d'au moins un paramètre de pression d'entrée lié à la pression dans la zone de l'entrée (12) du moteur à turbine à gaz (10).

8. Procédé de fonctionnement d'un moteur à turbine à gaz (10) selon l'une quelconque des revendications précédentes, comprenant en outre la détermination qu'un risque de givrage existe et, en réponse à celui-ci, la commande d'au moins un paramètre de fonctionnement du moteur à turbine à gaz (10) de sorte que le moteur à turbine à gaz (10) fonctionne dans la zone sûre.

9. Procédé de fonctionnement d'un moteur à turbine à gaz (10) selon la revendication 8, ladite existence d'un risque de givrage étant déterminée sur la base d'au moins la détermination du fait que l'aéronef est en descente.

10. Procédé de fonctionnement d'un moteur à turbine à gaz (10) selon les revendications 8 ou 9, ladite existence d'un risque de givrage étant déterminée sur la base d'au moins la détermination que la température ambiante est dans une plage prédéfinie.

11. Procédé de fonctionnement d'un moteur à turbine à gaz (10) selon l'une quelconque des revendications 8 à 10, ladite existence d'un risque de givrage étant déterminée sur la base d'au moins la détermination qu'un paramètre de température mesuré lié à une température dans le moteur à turbine à gaz (10) est inférieur à un seuil.

12. Procédé de fonctionnement d'un moteur à turbine à gaz (10) selon l'une quelconque des revendications précédentes, ladite commande d'au moins un paramètre de fonctionnement comprenant la commande du régime de ralenti du moteur à turbine à gaz (10).

13. Procédé de fonctionnement d'un moteur à turbine à gaz (10) selon l'une quelconque des revendications précédentes, ladite commande d'au moins un paramètre de fonctionnement comprenant la commande de la purge du compresseur.

14. Procédé de fonctionnement d'un moteur à turbine à gaz (10) selon l'une quelconque des revendications précédentes, ladite commande d'au moins un paramètre de fonctionnement comprenant la commande des aubes directrices d'entrée à incidence variable et/ou des aubes de stator à incidence variable.

15. Système (30) destiné au fonctionnement d'un moteur à turbine à gaz (10) afin d'atténuer le risque de formation de givre à l'intérieur du moteur à turbine à gaz (10), le système comprenant : un dispositif de commande (38) conçu pour commander au moins un paramètre de fonctionnement du moteur à turbine à gaz (10) de sorte que le moteur de turbine à gaz (10) fonctionne dans une zone sûre ; et un module de détermination de zone sûre (36) conçu pour déterminer si le moteur à turbine à gaz (10) fonctionne dans les limites de la zone sûre sur la base d'au moins un paramètre de pression de noyau lié à la pression à l'intérieur du moteur à turbine à gaz (10) et d'un paramètre de température de noyau lié à la température à l'intérieur du moteur à turbine à gaz (10), **caractérisé en ce que** la zone sûre est définie par le produit du paramètre de pression de noyau et du paramètre de température de noyau qui est supérieur à un seuil de sécurité.
